# EUROPÄISCHE PATENTANMELDUNG

(11) **EP 1 586 433 A1**
(43) Veröffentlichungstag der Anmeldung: **19.10.2005**
(21) Anmeldenummer: 05004189.6
(22) Anmeldetag: 25.02.2005
(51) Int. Cl.: B29C 45/66

(54) **Formschliesseinheit**

(30) Priorität: 15.04.2004 DE 102004018239
(71) Anmelder: Demag Ergotech GmbH, 90571 Schwaig (DE)
(72) Erfinder: Wessely, Ralph, 90559 Burgthann (DE)
(74) Vertreter: Maierl, Christine

(57) **Zusammenfassung**

Bei einer Formschließeinheit, insbesondere für eine Spritzgießmaschine, mit einer feststehenden und einer linear beweglichen Formaufspannplatte (2, 6) sowie mit einem Stangentrieb (8) für die Verfahrbewegung und die Verriegelung der beweglichen Formaufspannplatte in der Schließlage, wobei der Stangentrieb ein drehbar angetriebenes, erstes und ein drehfest angeordnetes, zweites Getriebeteil (13, 14), von denen das eine (13) in Richtung der Drehachse (M-M) an einer Basis (3) abgestützt und das andere (14) axial verschieblich geführt und bewegungsschlüssig mit der beweglichen Formaufspannplatte (6) verkoppelt ist, sowie mindestens ein die Getriebeteile kraftübertragend miteinander verbindendes, endseitig an exzentrisch zur Drehachse positionierten Lagerstellen (17) der Getriebeteile schwenkbeweglich angeschlossenes Stangenelement (16) enthält, werden erfindungsgemäß die kinematische Variationsbreite und insbesondere die Hubwege des Formplattenantriebssystems unter Beibehalt eines günstigen Geschwindigkeits- und Kraftverlaufs auf baulich kompakte und einfache Weise dadurch erheblich vergrößert, dass im Antriebszug zwischen Stangentrieb (8) und beweglicher Formaufspannplatte (6) ein von dem axial verschieblichen Getriebeteil (14) des Stangentriebs schwenkbeweglich angetriebener, endseitig einerseits an der Basis (3) und andrerseits an der beweglichen Formaufspannplatte angelenkter Kniehebelmechanismus (9) angeordnet ist.

## Beschreibung

Die Erfindung bezieht sch auf eine Formschließeinheit, insbesondere für eine Spritzgießmaschine, nach dem Oberbegriff des Patentanspruchs 1.

Bei einer Formschließeinheit dieser Art, wie sie aus der DE 199 25 325 A1 bekannt ist, wird die Verfahrbewegung und die Verriegelung der beweglichen Formaufspannplatte durch einen Stangentrieb bewirkt, welcher aus einer an einer feststehenden Basis axial abgestützten und um die zentrale Maschinenachse drehbeweglich angetriebenen Plattenteil und zwei Stangenelementen besteht, die endseitig über Kugelgelenke in gleichen Abständen diametral zur Maschinenachse einerseits mit dem Plattenteil und andrerseits mit der beweglichen Formaufspannplatte verkoppelt sind. Bei einer Drehbewegung des Plattenteils werden die Stangenelemente von einer bezüglich der Maschinenachse windschiefen Schwenk- in eine achsparallele Strecklage verkippt und dadurch die bewegliche Formaufspannplatte von der Öffnungs- in die Schließ- und Verriegelungsposition verfahren. Ein solcher Stangentrieb besitzt zwar eine günstige Kraftkennlinie mit hohen Verriegelungskräften in der Schließlage der beweglichen Formaufspannplatte, hat aber den Nachteil, dass sich, bezogen auf die Baugröße, nur sehr geringe Hubwege erzeugen lassen, so dass ein derartiger Formplattenantrieb in der Praxis nur in Sonderfällen, etwa zur Herstellung dünnwandiger, flacher Spritzgussteile, z. B. CDs, einsetzbar ist.

Aufgabe der Erfindung ist es, eine Formschließeinheit der eingangs genannten Art so auszubilden, dass die kinematische Variationsbreite und insbesondere die Hubwege des Formplattenantriebssystems unter Beibehalt eines günstigen Kraftverlaufs auf baulich kompakte und einfache Weise erheblich vergrößert werden. Diese Aufgabe wird erfindungsgemäß durch die im Patentanspruch 1 gekennzeichnete Formschließeinheit gelöst,

Erfindungsgemäß lässt sich auf Grund der Kombination von Stangen- und nachgeschaltetem Kniehebeltrieb das Hubverhältnis des Antriebssystems und somit die Hubkinematik der beweglichen Formaufspannplatte innerhalb weiter Grenzen beliebig gestalten, so dass auch längere Formauffahrwege, wie sie zur Herstellung von Formteilen größerer Wandstärke und/oder Bauteilhöhe erforderlich sind, ohne weiteres realisiert und dennoch kurze Zykluszeiten und hohe Verriegelungskräfte bei einer gleichzeitig kompakten und robusten Bauweise des Formplattenantrieb erzielt werden können.

Eine konstruktiv besonders bevorzugte Ausgestaltung der Erfindung besteht nach Anspruch 2 darin, dass das Stangenelement unmittelbar mit dem Rotor des Drehantriebs über eine an diesem exzentrisch zur Drehachse angeordnete Lagerstelle verkoppelt ist, so dass.auf ein gesondertes, drehbares Getriebeteil oder gar ein aufwändiges Zwischengetriebe zwischen Drehantrieb und Stangenelement verzichtet und die sich dabei ergebende Begrenzung der Lagerstellenexzentrizität auf den Rotorradius durch ein entsprechend höheres Hubverstärkungsverhältnis des nachgeschalteten Kniehebelmechanismus ausgeglichen wird.

Nach Anspruch 3 wird als Drehantrieb zur Erzeugung hoher Antriebsmomente ein elektrischer Hohlwellenmotor mit einem am Hohlwellenende angeordneten Exzentergelenk für das Stangenelement bevorzugt, und ein besonders günstiger Kraftverlauf mit hohen Verriegelungs- und Aufreißkräften wird nach den Ansprüchen 4 und 5 zweckmäßigerweise dadurch erreicht, dass sich der Kniehebelmechanismus im Verriegelungszustand der Formaufspannplatten in oder nahe der Strecklage befindet und/oder das Stangenelement parallel zur Drehachse des Stangentriebs ausgerichtet ist. Aus Gründen einer symmetrischen Kraftverteilung enthält der Stangentrieb nach Anspruch 6 vorzugsweise zwei an mit gleichen Abständen zur Drehachse einander diametral gegenüberliegende Lagerstellen angeschlossene Stangenelemente.

Das Hubverstärkungsverhältnis des Kniehebelmechanismus wird, wie nach Anspruch 7 bevorzugt, am einfachsten durch die Lage des mit dem axial verschieblichen Getriebeteil des Stangentriebs verkoppelten, antriebsseitigen Gelenkpunktes an dem basisseitigen, ersten Kniehebel des Kniehebelmechanismus vorgegeben, wobei der Kniehebelmechanismus sowohl als 5-Punkt-Gelenksystem nach Anspruch 8 oder zur Erzielung großer Hubwege bei vergleichsweise kleinen Schwenkwinkeln nach Anspruch 9 als 7-Punkt- Gelenksystem ausgebildet sein kann.

Aus Gründen einer kippstabilen Kraftbeaufschlagung wird die Hubkraft des Kniehebelmechanismus vorzugsweise in Form eines oder mehrerer mittensymmetrischer Kräftepaare in die bewegliche Formaufspannplatte eingeleitet, derart, dass der Kniehebelmechanismus nach Anspruch 10 aus paarweise zur Maschinenachse in gleichen Abständen angeordneten, jeweils antriebsschlüssig mit dem axial verschieblichen Getriebeteil des Stangentriebs verbundenen Kniehebelgestängen besteht. Zum Verschwenken der spiegelsymmetrisch identischen Einzelgestänge in zueinander entgegengesetzter Richtung sind diese nach Anspruch 11 vorzugsweise über jeweils einen Steuerlenker mit dem axial verschieblichen Stangentriebteil verkoppelt.

Nach den Ansprüchen 12 und 13 schließlich ist der Drehantrieb mit der Drehachse vorzugsweise koaxial zur Maschinenachse angeordnet und gehäuseseitig an der den Kniehebelmechanismus endseitig abstützenden Basis befestigt, woraus sich eine besonders kompakte Bauweise des gesamten Antriebs- und Gestängesystems ergibt.

Die Erfindung wird nunmehr beispielsweise in Verbindung mit den Zeichnungen näher erläutert. Es zeigen in stark schematisierter Darstellung:
- **Fig. 1**: die Seitenansicht einer Formschließeinheit nach der Erfindung in der Schließlage und
- **Fig. 2**: die in Fig.1 dargestellte Formschließeinheit in der Öffnungslage der beweglichen Formaufspannplatte.

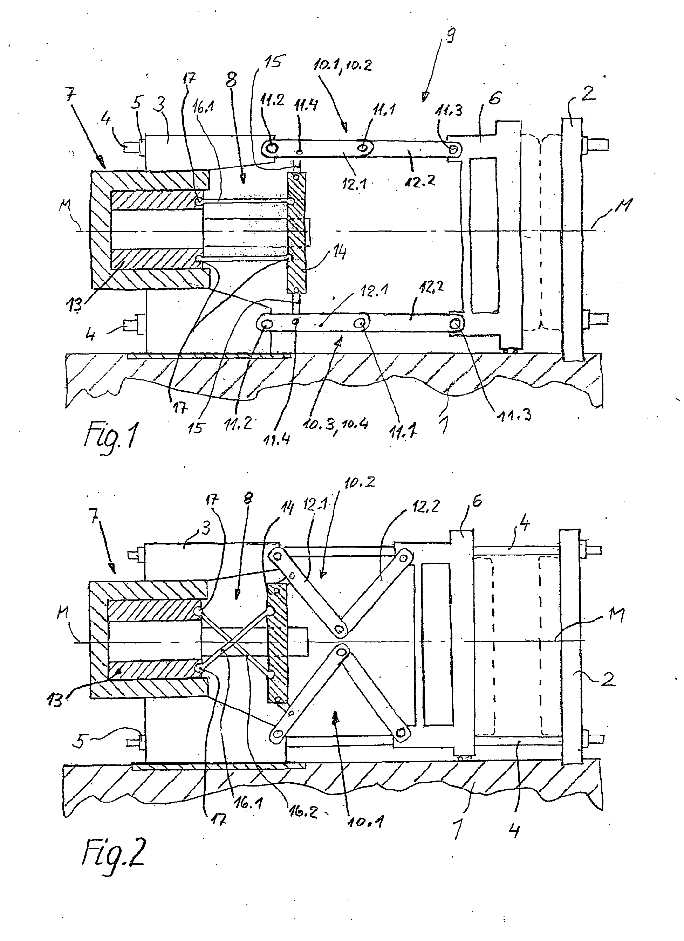

Die in den Fig. gezeigte Formschließeinheit enthält als Hauptbestandteile eine am Maschinenbett 1 befestigte Formaufspannplatte 2, eine Basis 3, die über Holme 4 mit der feststehenden Formaufspannplatte 2 zugfest und zum Zwecke der Formhöheneinstellung durch Verstellmuttern 5 abstandsveränderlich verbunden ist, eine bewegliche Formaufspannplatte 6, welche in Richtung der Maschinenachse M-M linear verfahrbar auf den Holmen 4 geführt ist, einen Drehantrieb 7 in Form eines elektrischen Hohlwellenmotors, einen von diesem angetriebenen Stangentrieb 8 und einen diesem nachgeschalteten Kniehebelmechanismus 9 für die Verfahrbewegung und Verriegelung der beweglichen Formaufspannplatte 6 in der in Fig. 1 gezeigten Schließlage.

Aus Gründen einer kippstabilen Kraftbeaufschlagung der beweglichen Formaufspannplatte 6 ist der Kniehebelmechanismus 9 aus vier identischen, parallel wirkenden Einzelgestängen 10.1....10.4 aufgebaut, die jeweils paarweise spiegelsymmetrisch zur Maschinenachse M-M zwischen der Basis 3 und der beweglichen Formaufspannplatte 6 angeordnet sind. Jedes dieser Kniehebelgestänge 10 besteht aus zwei über einen freien Gelenkpunkt 11.1 miteinander verbundenen Einzelhebeln 12.1 und 12.2, die endseitig einerseits über einen Gelenkpunkt 11.2 mit der Basis 3 und andrerseits über einen Gelenkpunkt 11.3 mit der beweglichen Formaufspannplatte 6 verkoppelt sind.

Durch den Stangentrieb 8 wird die Drehbewegung des gehäuseseitig an der Basis 3 befestigten und mit der Drehachse des Hohlwellenrotors 13 koaxial zur Maschinenachse M-M ausgerichteten Drehantriebs 7 in eine Hubbewegung eines axial verschieblich, aber drehfest an der Basis 3 geführten Getriebeteils 14 und von diesem über Zwischenlenker 15 in zueinander entgegengesetzte Schwenkbewegungen der Kniehebelgestänge 10.1...10.4 umgesetzt, wobei das Hubverstärkungsverhältnis der Kniehebelgestänge 10 von der Lage des antriebsseitigen Gelenkpunktes 11.4 zwischen dem freien und dem basisseitigen Gelenkpunkt 11.1 und 11.2 des Kniehebels 12.1 abhängig ist.

Der Rotor 13 des Drehantriebs 7 ist als integraler Bestandteil in den Stangentrieb 8 einbezogen und bildet dessen zweites, bezüglich des Getriebeteils 14 drehbar angetriebenes und axial unverschieblich gelagertes Getriebeteil. Komplettiert wird der Stangentrieb 8 durch mindestens ein und bei dem gezeigten Ausführungsbeispiel zwei Stangenelemente 16.1 und 16.2, durch die der Rotor 13 und das Getriebeteil 14 an ihren einander zugekehrten, zueinander parallelen Stirnseiten über kugelgelenkförmige, jeweils in gleichen Abständen diametral zur Drehachse des Drehantriebs 7 einander gegenüberliegende Lagerstellen 17 kraftübertragend miteinander verbunden sind.

In der in Fig. 2 gezeigten Drehposition des Rotors 13 sind die Stangenelemente 16 beidseitig der Maschinenachse M-M windschief zu dieser gegensinnig zueinander verkippt und das Getriebeteil 14 befindet sich in der Rückhublage, in der die Kniehebelgestänge 10 über die Zwischenlenker 15 einwärts verschwenkt sind und die bewegliche Formaufspannplatte 6 demzufolge in die Öffnungsstellung zurückgefahren ist. Bei einer Drehung des Rotors 13 in die andere Endposition gelangen die Stangenelemente 16 in die zueinander und zur Maschinenachse M-M parallele Strecklage (Fig. 1) und dadurch das Getriebeteil 14 in die vordere Hubendlage, so dass die Kniehebelgestänge 10 über die Zwischenlenker 15 auswärts in die oder kurz über die Strecklage hinaus verschwenkt werden und sich die - in den Fig. gestrichelt dargestellten - Formwerkzeugteile nunmehr in der Schließlage befindet. Beim Zurückdrehen des Hohlwellenmotors 7 kehrt sich der beschriebene Bewegungsablauf um und die Formaufspannplatte 6 wird erneut in die Öffnungslage (Fig.1) verfahren.

Die Kinematik und vor allem das Drehwinkel-/Hubverhältnis des kombinierten Stangen- und Kniehebelmechanismus 8, 9 lässt sich ohne Vergrößerung des Bauvolumens z. B. allein durch entsprechende Positionierung der Gelenkpunkte in weiten Grenzen beliebig gestalten. Von besonderem Vorteil ist dabei der gerade für Formschließeinheiten günstige Geschwindigkeits- und Kraftverlauf mit einer in Richtung der Öffnungslage zunehmenden Verfahrgeschwindigkeit und einer in Richtung der Schließlage ansteigenden Kraftverstärkung bis hin zu extrem hohen Schließ- und Aufreißkräften und einer sicheren, formschlüssigen Verriegelung in bzw. nahe der Totpunktlage der hintereinander geschalteten Stangen- und Kniehebeltriebe.

## Patentansprüche

1. Formschließeinheit, insbesondere für eine Spritzgießmaschine, mit einer feststehenden und einer linear beweglichen Formaufspannplatte sowie mit einem Stangentrieb für die Verfahrbewegung und die Verriegelung der beweglichen Formaufspannplatte in der Schließlage, wobei der Stangentrieb ein drehbar angetriebenes, erstes und ein drehfest angeordnetes, zweites Getriebeteil, von denen das eine in Richtung der Drehachse an einer Basis abgestützt und das andere axial verschieblich geführt und bewegungsschlüssig mit der beweglichen Formaufspannplatte verkoppelt ist, sowie mindestens ein die Getriebeteile kraftübertragend miteinander verbindendes, endseitig an exzentrisch zur Drehachse positionierten Lagerstellen der Getriebeteile schwenkbeweglich angeschlossenes Stangenelement enthält, **dadurch gekennzeichnet, dass**
im Antriebszug zwischen Stangentrieb (8) und beweglicher Formaufspannplatte (6) ein von dem axial verschieblichen Getriebeteil (14) des Stangentriebs schwenkbeweglich angetriebener, endseitig einerseits an der Basis (3) und andrerseits an der beweglichen Formaufspannplatte angelenkter Kniehebelmechanismus (9) angeordnet ist.

2. Formschließeinheit nach Anspruch 1, **dadurch gekennzeichnet, dass**
das Stangenelement (16) endseitig unmittelbar mit dem Rotor (13) des Drehantriebs (7) über eine an diesem exzentrisch zur Drehachse (M-M) angeordnete Lagerstelle (17) verkoppelt ist.

3. Formschließeinheit nach einem der vorhergehenden Ansprüche, **dadurch gekennzeichnet, dass**
der Drehantrieb (7) ein elektrischer Hohlwellenmotor ist.

4. Formschließeinheit nach einem der vorhergehenden Ansprüche, **dadurch gekennzeichnet, dass**
der Kniehebelmechanismus (9) durch das axial verschiebliche Getriebeteil (14) in die die Formaufspannplatte (6) verriegelnde Strecklage verschwenkbar ist.

5. Formschließeinheit nach einem der vorhergehenden Ansprüche, **dadurch gekennzeichnet, dass**
das Stangenelement (16) in oder nahe der Strecklage des Kniehebelmechanismus (9) parallel zur Drehachse (M-M) ausgerichtet ist.

6. Formschließeinheit nach einem der vorhergehenden Ansprüche, **dadurch gekennzeichnet, dass**
der Stangentrieb (8) zwei symmetrisch zur Drehachse (M-M) an einander diametral gegenüberliegende Lagerstellen (17) angeschlossene Stangenelemente (16.1, 16.2) enthält.

7. Formschließeinheit nach einem der vorhergehenden Ansprüche, **dadurch gekennzeichnet, dass**
der Kniehebelmechanismus (9) mindestens einen freien Gelenkpunkt (11.1) und einen antriebsschlüssig mit dem axial verschieblichen Getriebeteil (14) verkoppelten, nach Maßgabe des Hubverstärkungsverhältnisses im Bereich zwischen dem basisfesten und dem freien Gelenkpunkt (11.2, 11.1) angeordneten Gelenkpunkt (11.4) aufweist.

8. Formschließeinheit nach einem der vorhergehenden Ansprüche, **dadurch gekennzeichnet, dass**
der Kniehebelmechanismus (9) als Doppelhebelmechanismus (12.1, 12.2) ausgebildet ist.

9. Formschließeinheit nach einem der Ansprüche 1 bis 6, **dadurch gekennzeichnet; dass**
der Kniehebelmechanismus (9) als Dreihebelmechanismus mit einem basisseitigen ersten, einem aufspannplattenseitigen, zweiten und einem diese gelenkig miteinander verbindenden, dritten Hebel in Form eines an einer linear beweglichen Zwischenplatte angelenkten Doppelhebels ausgebildet ist.

10. Formschließeinheit nach einem der vorhergehenden Ansprüche, **dadurch gekennzeichnet, dass**
der Kniehebelmechanismus (9) aus paarweise in gleichen Abständen zu einer in Hubrichtung der beweglichen Formaufspannplatte (6) liegenden Symmetrieebene angeordneten, jeweils antriebsschlüssig mit dem axial verschieblichen Getriebeteil (14) verbundenen Kniehebelgestängen (10.1...10.4) besteht.

11. Formschließeinheit nach einem der vorhergehenden Ansprüche, **gekennzeichnet durch**
das axial verschiebliche Getriebeteil (14) mit in gleichen Abständen zur Drehachse (M-M) angelenkten Steuerlenkern (15) zum Antrieb von beidseitig der Symmetrieebene des Getriebeteils angeordneten Kniehebelgestängen (10) in zueinander entgegengesetzter Schwenkrichtung versehen ist.

12. Formschließeinheit nach einem der vorhergehenden Ansprüche, **dadurch gekennzeichnet, dass**
der Drehantrieb (7) mit der Drehachse (M-M) koaxial zur Symmetrieachse der beweglichen Formaufspannplatte (6) angeordnet ist.

13. Formschließeinheit nach einem der vorhergehenden Ansprüche, **dadurch gekennzeichnet, dass**
der Drehantrieb (7) gehäuseseitig an der den Kniehebelmechanismus (9) endseitig abstützenden Basis (3) befestigt ist.
